# EUROPÄISCHE PATENTANMELDUNG

(11) **EP 2 434 170 A2**
(43) Veröffentlichungstag der Anmeldung: **28.03.2012**
(21) Anmeldenummer: 11178617.4
(22) Anmeldetag: 24.08.2011
(51) Int. Cl.: F16C 19/28, F16C 33/58

(54) **Lageranordnung**

(30) Priorität: 22.09.2010 DE 102010041186; 15.12.2010 DE 102010063132
(71) Anmelder: Aktiebolaget SKF, 41 550 Göteborg (SE)
(72) Erfinder: Olschewski, Armin, 97422 Schweinfurt (DE); Stubenrauch, Arno, 97491 Aidhausen (DE)
(74) Vertreter: Schonecke, Mitja

(57) **Zusammenfassung**

Die Erfindung betrifft eine Lageranordnung (1), umfassend ein mindestens zweireihiges Wälzlager (2) mit mindestens einem Außenring (3), mindestens einem Innenring (4, 5) und mindestens zwei Reihen Wälzkörper (6, 7, 8, 9), die zwischen den Innen- und Außenringen (3, 4, 5) angeordnet sind, wobei mindestens einer der Lagerringe (3) mindestens zwei nebeneinander angeordnete Laufbahnen (10, 11, 12, 13) für die Wälzkörper (6, 7, 8, 9) aufweist und wobei zumindest zwischen zwei Laufbahnen (10, 11, 12, 13) ein sich radial erstreckender Bord (14, 15, 16, 17, 18) für den axialen Anlauf von Wälzkörpern (6, 7, 8, 9) angeordnet ist. Um den Lauf des Wälzlagers zu verbessern, sieht die Erfindung vor, dass der den mindestens einen Bord (14, 15, 16, 17, 18) tragende Lagerring (3) im Bereich der axialen Erstreckung zumindest eines Bordes (14, 15, 16, 17, 18) mindestens eine Ausnehmung (19, 20, 21, 22, 23) aufweist, wobei die Ausnehmung (19, 20, 21, 22, 23) an der dem Bord (14, 15, 16, 17, 18) gegenüberliegenden radial außen- oder innenliegenden Seite des Lagerrings (3) angeordnet ist.

## Beschreibung

Die Erfindung betrifft eine Lageranordnung, umfassend ein mindestens zweireihiges Wälzlager mit mindestens einem Außenring, mindestens einem Innenring und mindestens zwei Reihen Wälzkörper, die zwischen den Innen- und Außenringen angeordnet sind, wobei mindestens einer der Lagerringe mindestens zwei nebeneinander angeordnete Laufbahnen für die Wälzkörper aufweist und wobei zumindest zwischen zwei Laufbahnen ein sich radial erstreckender Bord für den axialen Anlauf von Wälzkörpern angeordnet ist.

Lageranordnungen dieser Art sind im Stand der Technik hinlänglich bekannt. Um hohe Lagerkräfte aufnehmen zu können, sind mehrere parallel angeordnete Wälzkörperreihen vorgesehen. Beispielsweise kann zur Lagerung eines Rotors einer Windenergieanlage ein vierreihiges Zylinderrollenlager eingesetzt werden, womit hohe Radialkräfte übertragbar sind. Solche Lager können auch beispielsweise in der genannten Anwendung für die Lagerung eines Zahnrades eines Getriebes eingesetzt werden, wobei hiermit hohe radiale Lasten auf eine Welle übertragen werden können. Als Getriebe werden hierbei zumeist schrägverzahnte Stirnradgetriebe eingesetzt, die in Planetengetrieben benötigt werden. Demgemäß müssen neben den Radiallasten auch axiale Lasten übertragen werden, wozu die gattungsgemäße Ausgestaltung eines Lagers zum Einsatz kommt. Durch die Ausstattung der Lagerringe mit Borden können die Wälzkörper, insbesondere die Zylinderrollen, axial am Lagerring anlaufen und so auch axiale Lasten übertragen.

Es hat sich als nachteilig herausgestellt, dass bei entsprechend großen Axiallasten die Zylinderrollen einer Beaufschlagung mit einem Kippmoment unterliegen, so dass sie nicht mehr in der optimalen Lage bleiben, d. h. in der Lage, in der ihre Drehachsen parallel zur Drehachse des Lagers sind.

Die nachteilige Folge sind erhöhter Verschleiß des Lagers und insgesamt ein unrunder Lauf des Lagers.

Der Erfindung liegt die **Aufgabe** zu Grunde, eine Lageranordnung der eingangs genannten Art so fortzubilden, dass die genannten Nachteile in einfacher und kostengünstiger Weise überwunden werden können. Demgemäß soll sichergestellt werden, dass auch im Falle der Übertagung höherer Axiallasten bei einem gattungsgemäßen Lager die Kippneigung der Wälzkörper gering bleibt und somit ein gutes Laufverhalten bei geringem Verschleiß sichergestellt ist.

Die **Lösung** dieser Aufgabe durch die Erfindung ist dadurch gekennzeichnet, dass der den mindestens einen Bord tragende Lagerring im Bereich der axialen Erstreckung zumindest eines Bordes mindestens eine Ausnehmung aufweist, wobei die Ausnehmung an der dem Bord gegenüberliegenden radial außen- oder innenliegenden Seite des Lagerrings angeordnet ist.

Vorzugsweise ist die mindestens eine Ausnehmung als umlaufende Ringnut ausgebildet. Sie ist im Bereich ihrer axialen Erstreckung vorzugsweise frei von Störungen, insbesondere frei von Schmierbohrungen. Letzte können die gewünschte Spannungsentlastung negativ beeinflussen.

Eine konkretere Ausführung sieht vor, dass der Lageraußenring mindestens einen Bord aufweist, wobei sich der mindestens eine Bord radial nach innen erstreckt und wobei die mindestens eine Ausnehmung in den Außenumfang des Außenrings eingearbeitet ist.

Die axiale Erstreckung der Ausnehmung beträgt dabei bevorzugt zwischen 80 % und 120 % der axialen Erstreckung des Bordes, vorzugsweise 100 % der axialen Erstreckung des Bordes.

Die Ausnehmung kann als Eindrehung ausgebildet sein. Möglich ist es auch, dass die Ausnehmung als Einrollung ausgebildet ist, was vorteilhaft bezüglich Kerbspannungen ist.

Die Ausnehmung kann im Radialschnitt eine Rechteckform aufweisen. Eine alternative Lösung sieht vor, dass die Ausnehmung im Radialschnitt eine Trapezform aufweist; in diesem Falle beträgt der seitliche Winkel der Trapezform zur Drehachse des Wälzlagers bevorzugt zwischen 30° und 60°. Eine weitere Alternative sieht für die Ausnehmung im Radialschnitt eine wannenförmige Kontur vor.

Die Lageranordnung ist besonders bevorzugt Bestandteil einer Windkraftanlage ist, wobei am Außenring des Wälzlagers ein schrägverzahntes Zahnrad eines Getriebes, insbesondere eines Planetengetriebes, angeordnet ist. Die hierbei zwangsläufig entstehenden und zu übertragenden Axialkräfte führen so nicht zu einer Kippung der Wälzkörper und somit zu einem verbesserten Lauf.

Wesentlich ist, dass zumindest im Bereich der Ausnehmung der Lagerring einstückig ausgebildet ist. Dies gilt besonders für den Lageraußenring.

Durch die Anordnung der erfindungsgemäßen Ausnehmungen wird der mit diesen versehene Lagerring gezielt in seiner Biegesteifigkeit um eine zur Drehachse senkrechte Achse geschwächt, so dass axiale Lasten nicht mehr in der bisherigen Weise zu einer Beaufschlagung der Wälzkörper mit einem Kippmoment führen. Vielmehr verbleibt der Wälzkörper verbessert in der Lage, in der seine Drehachse parallel zur Drehachse des Lagers ist.

Das Laufverhalten ist damit verbessert. Gleichermaßen ist der Verschleiß des Lagers geringer.

In der Zeichnung sind Ausführungsbeispiele der Erfindung dargestellt. Es zeigen:
- Fig. 1: den Radialschnitt einer Lageranordnung mit einem vierreihigen Zylinderrollenlager, mit der ein Zahnrad eines Planetengetriebes einer Windkraftanlage gelagert wird,
- Fig. 2a: die Einzelheit "Z" gemäß einer ersten Ausführungsform der Erfindung,
- Fig. 2b: die Einzelheit "Z" gemäß einer zweiten Ausführungsform der Erfindung und
- Fig. 2c: die Einzelheit "Z" gemäß einer dritten Ausführungsform der Erfindung.

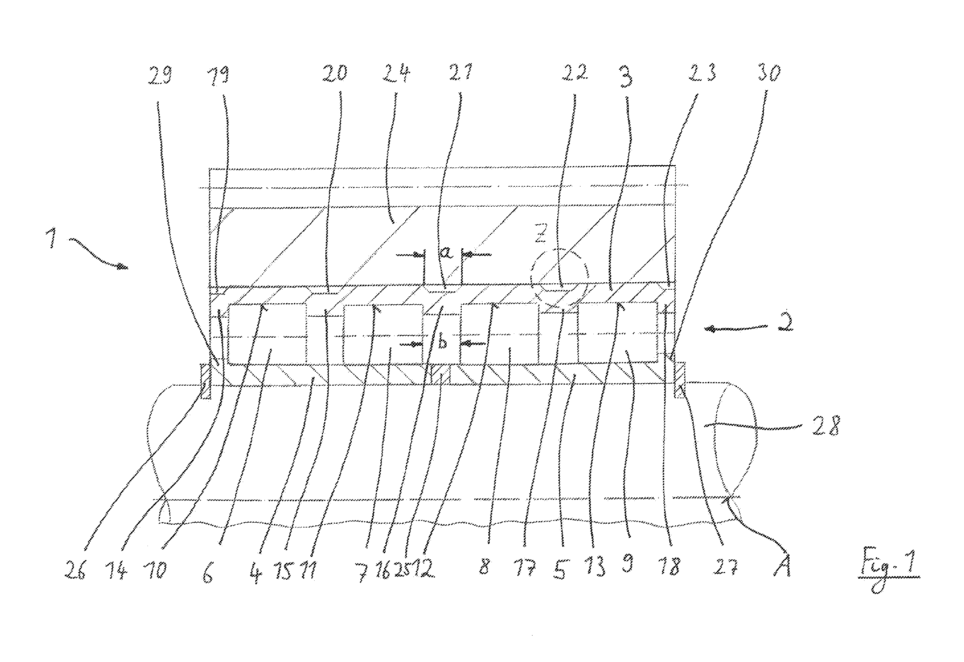

In Fig. 1 ist eine Lageranordnung 1 skizziert, mit der ein Zahnrad 24 eines Planetengetriebes einer Windkraftanlage auf einer Welle 28 gelagert wird. Da es sich bei dem Zahnrad 24 um ein schrägverzahntes Stirnrad handelt, werden im Betrieb auch axiale Kräfte erzeugt, die von dem Wälzlager 2 der Lageranordnung 1 aufgenommen werden müssen.

Das Wälzlager 2 ist als vierreihiges Zylinderrollenlager ausgebildet. Vorliegend ist der Außenring 3 des Lagers einstückig ausgeführt (was aber nicht zwingend ist); er weist demgemäß vier nebeneinander liegende Laufbahnen 10, 11, 12 und 13 auf. Zwischen zwei Laufbahnen ist jeweils ein sich radial nach innen erstreckende Bord 15, 16, 17 angeordnet. Auch in den axialen Endbereichen des Außenrings 3 sind Borde 14 und 18 vorhanden.

Das Wälzlager 2 weist zwei Innenringe 4 und 5 auf, die die entsprechenden Innenringlaufbahnen haben. Zwischen den beiden Innenringen 4, 5 ist ein Distanzring 25 angeordnet. Jeder der beiden Innenringe 4, 5 weist im axialen Endbereich des Wälzlagers 2 Borde 29 und 30 auf. Somit ist es möglich, über den Außenring 3 und die Wälzkörperreihen 6 und 9 auf die Innenringe 4, 5 axiale Kräfte zu übertragen. Das Wälzlager 2 wird auf der Welle 28 axial mittels zweier Sprengringe 26 und 27 fixiert, so dass eine feste Lagereinheit entsteht.

Wesentlich ist, dass der die Borde 14, 15, 16, 17, 18 tragende Außenring 3 im Bereich der axialen Erstreckung der Borde jeweils eine Ausnehmung 19, 20, 21, 22, 23 aufweist. Diese Ausnehmung 19, 20, 21, 22, 23 sind am Außenumfang des Außenrings 3 angeordnet, d. h. an der den Borden 14, 15, 16, 17, 18 gegenüberliegenden radial außenliegenden Seite des Lagerrings 3.

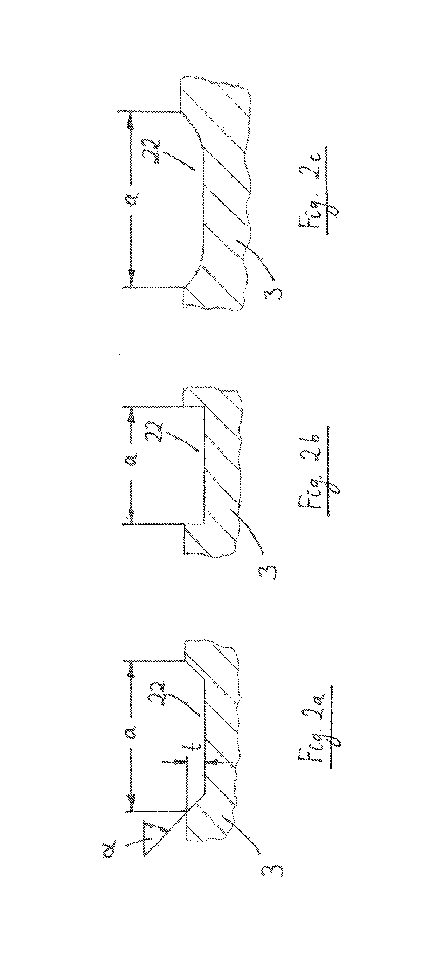

Die Ausgestaltung der Ausnehmungen 19, 20, 21, 22, 23 ist beispielhaft für verschiedene Lösungen in den Figuren 2a, 2b und 2c gezeigt, und zwar für die Ausnehmung 22.

Wie in den genannten Figuren gesehen werden kann, erstreckt sich die Ausnehmung 19, 20, 21, 22, 23 entlang einer Erstreckung a in Richtung der Drehachse A des Wälzlagers 2. Die korrespondierende axiale Erstreckung des Bordes 14, 15, 16, 17, 18 ist mit b bezeichnet (s. Fig. 1). Vorteilhaft für eine optimale Erzielung des genannten erfindungsgemäßen Effekts ist, dass die axiale Erstreckung b der Borde und die axiale Erstreckung a der Ausnehmung etwa gleich groß sind.

Dabei können verschiedene Formen für die Ausnehmung vorgesehen werden.

Fig. 2a zeigt eine trapezförmige Ausgestaltung. Der seitliche Trapezwinkel ist mit α angegeben; er liegt bei ca. 30° bis 60° zur Drehachse A des Wälzlagers.

In Fig. 2b ist eine rechteckförmige Ausgestaltung der Ausnehmung 19, 20, 21, 22, 23 vorgesehen.

Fig. 2c zeigt eine wannenförmige Kontur für die Ausnehmung.

Die radiale Tiefe t der Ausnehmung 19, 20, 21, 22, 23 beträgt vorzugsweise zwischen 1 mm und 10 mm, besonders bevorzugt zwischen 2 mm und 5 mm.

Im Ausführungsbeispiel ist eine Lösung dargestellt, bei der ein einteiliger Außenring mit vier Laufbahnen zum Einsatz kommt; die vier Reihen Zylinderrollen arbeiten mit zwei Lagerinnenringen zusammen, wobei zwischen den beiden Innenringen der Distanzring 25 angeordnet ist.

Andere Lösungen sind aber genauso möglich. Beispielsweise kann vorgesehen werden, dass zwei Außenringe mit je zwei Laufbahnen eingesetzt werden, wobei die beiden Außenringe mittels eines Distanzrings auf Abstand gehalten werden. Die vier Reihen Zylinderrollen können in diesem Falle mit zwei Innenringen zusammenwirken, die axial aneinander stoßen, d. h. zwischen denen kein Distanzring angeordnet ist. An der axialen Zusammentreffstelle sind die Innenringe bordfrei; sie haben allerdings an ihrem axial außenliegenden Ende je einen Bord (wie in Fig. 1). Die Außenringe haben in diesem Falle jeweils drei Borde, die die beiden Laufbahnen axial begrenzen. An jeder Stelle, an der ein Bord ist, ist am Außenumfang des Außenrings eine Ausnehmung eingebracht, die die jeweilige Länge des Bordes aufweist.

### Bezugszeichenliste

- 1: Lageranordnung
- 2: Wälzlager
- 3: Außenring
- 4: Innenring
- 5: Innenring
- 6: Wälzkörper
- 7: Wälzkörper
- 8: Wälzkörper
- 9: Wälzkörper
- 10: Laufbahn
- 11: Laufbahn
- 12: Laufbahn
- 13: Laufbahn
- 14: Bord
- 15: Bord
- 16: Bord
- 17: Bord
- 18: Bord
- 19: Ausnehmung
- 20: Ausnehmung
- 21: Ausnehmung
- 22: Ausnehmung
- 23: Ausnehmung
- 24: Zahnrad
- 25: Distanzring
- 26: Sprengring
- 27: Sprengring
- 28: Welle
- a: axiale Erstreckung der Ausnehmung
- b: axiale Erstreckung des Bordes
- α: Winkel
- A: Drehachse
- t: radiale Tiefe

## Patentansprüche

1. Lageranordnung (1), umfassend ein mindestens zweireihiges Wälzlager (2) mit mindestens einem Außenring (3), mindestens einem Innenring (4, 5) und mindestens zwei Reihen Wälzkörper (6, 7, 8, 9), die zwischen den Innen- und Außenringen (3, 4, 5) angeordnet sind, wobei mindestens einer der Lagerringe (3) mindestens zwei nebeneinander angeordnete Laufbahnen (10, 11, 12, 13) für die Wälzkörper (6, 7, 8, 9) aufweist und wobei zumindest zwischen zwei Laufbahnen (10, 11, 12, 13) ein sich radial erstreckender Bord (14, 15, 16, 17, 18) für den axialen Anlauf von Wälzkörpern (6, 7, 8, 9) angeordnet ist,
**dadurch gekennzeichnet,**
**dass** der den mindestens einen Bord (14, 15, 16, 17, 18) tragende Lagerring (3) im Bereich der axialen Erstreckung zumindest eines Bordes (14, 15, 16, 17, 18) mindestens eine Ausnehmung (19, 20, 21, 22, 23) aufweist, wobei die Ausnehmung (19, 20, 21, 22, 23) an der dem Bord (14, 15, 16, 17, 18) gegenüberliegenden radial außen- oder innenliegenden Seite des Lagerrings (3) angeordnet ist.

2. Lageranordnung nach Anspruch 1, **dadurch gekennzeichnet, dass** die mindestens eine Ausnehmung (19, 20, 21, 22, 23) als umlaufende Ringnut ausgebildet ist.

3. Lageranordnung nach Anspruch 1 oder 2, **dadurch gekennzeichnet, dass** die mindestens eine Ausnehmung (19, 20, 21, 22, 23) im Bereich ihrer axialen Erstreckung frei von Störungen ist, insbesondere frei von Schmierbohrungen.

4. Lageranordnung nach einem der Ansprüche 1 bis 3, **dadurch gekennzeichnet, dass** der Lageraußenring (3) mindestens einen Bord (14, 15, 16, 17, 18) aufweist, wobei sich der mindestens eine Bord (14, 15, 16, 17, 18) radial nach innen erstreckt und wobei die mindestens eine Ausnehmung (19, 20, 21, 22, 23) in den Außenumfang des Außenrings (3) eingearbeitet ist.

5. Lageranordnung nach einem der Ansprüche 1 bis 4, **dadurch gekennzeichnet, dass** die axiale Erstreckung (a) der Ausnehmung (19, 20, 21, 22, 23) zwischen 80 % und 120 % der axialen Erstreckung (b) des Bordes (14, 15, 16, 17, 18), vorzugsweise 100 % der axialen Erstreckung (b) des Bordes (14, 15, 16, 17, 18), beträgt.

6. Lageranordnung nach einem der Ansprüche 1 bis 5, **dadurch gekennzeichnet, dass** die Ausnehmung (19, 20, 21, 22, 23) als Eindrehung oder als Einrollung ausgebildet ist.

7. Lageranordnung nach einem der Ansprüche 1 bis 6, **dadurch gekennzeichnet, dass** die Ausnehmung (19, 20, 21, 22, 23) im Radialschnitt eine Rechteckform aufweist.

8. Lageranordnung nach einem der Ansprüche 1 bis 6, **dadurch gekennzeichnet, dass** die Ausnehmung (19, 20, 21, 22, 23) im Radialschnitt eine Trapezform aufweist, wobei der seitliche Winkel (α) der Trapezform zur Drehachse (A) des Wälzlagers (2) vorzugsweise zwischen 30° und 60° beträgt..

9. Lageranordnung nach einem der Ansprüche 1 bis 6, **dadurch gekennzeichnet, dass** die Ausnehmung (19, 20, 21, 22, 23) im Radialschnitt eine wannenförmige Kontur aufweist.

10. Lageranordnung nach einem der Ansprüche 1 bis 9, **dadurch gekennzeichnet, dass** sie Bestandteil einer Windkraftanlage ist, wobei am Außenring (3) des Wälzlagers (2) ein schrägverzahntes Zahnrad (24) eines Getriebes, insbesondere eines Planetengetriebes, angeordnet ist.
